# EUROPÄISCHE PATENTSCHRIFT

(11) **EP 3 542 437 B1**
(45) Veröffentlichungstag und Bekanntmachung des Hinweises auf die Patenterteilung: **28.09.2022**
(21) Anmeldenummer: 17804093.7
(22) Anmeldetag: 07.11.2017
(51) Int. Cl.: H02J 7/00, B60L 3/04, B60L 3/00, H02J 7/34, H01H 39/00

(54) **SICHERUNGSVERFAHREN, VORRICHTUNG ZU DESSEN UMSETZUNG UND HYBRID- ODER ELEKTRO-FAHRZEUG**
SAFETY PROCEDURE, DEVICE FOR THE IMPLEMENTATION THEREOF, AND HYBRID OR ELECTRIC VEHICLE
PROCÉDÉ DE SÛRETÉ, DISPOSITIF POUR SA MISE EN OEUVRE ET VÉHICULE HYBRIDE OU ÉLECTRIQUE

(30) Priorität: 15.11.2016 DE 102016222340
(43) Veröffentlichungstag der Anmeldung: 25.09.2019
(73) Patentinhaber: Bayerische Motoren Werke Aktiengesellschaft, 80809 München (DE)
(72) Erfinder: RUCKER, Andreas, 86161 Augsburg (DE); FERENCZI, Izabella, 80935 München (DE); ROIG, Lluis, 81539 München (DE); RÖSLER, Constantin Ferdinand, 80469 München (DE)
(86) Internationale Anmeldenummer: PCT/EP2017/078401
(87) Internationale Veröffentlichungsnummer: WO 2018/091308

(56) Entgegenhaltungen:
- DE-A1-102011 080 058
- US-A1- 2012 062 029
- US-A1- 2013 234 510
- US-A1- 2013 293 248
- US-A1- 2014 015 316

## Beschreibung

Die vorliegende Erfindung betrifft ein Sicherungsverfahren, eine Vorrichtung zu dessen Umsetzung in einem Fahrzeug mit Starkstrom und Hochvoltkomponenten, insbesondere einem Hybrid- oder Elektro-Fahrzeug, sowie ein Hybrid- oder Elektro-Fahrzeug.

Es ist aus dem Stand der Technik bekannt, dass in Hybrid-, Wasserstoff- und ElektroFahrzeugen Starkstrom- und Hochvoltkomponenten, wie z.B. Inverter, Ladegeräte, Klimakompressor, elektrische Heizung, DC/DC-Wandler, HV-Verteiler oder HV-Hauptleitungen und Kabelbäume, nicht ohne geeignete Schutzmaßnahmen in Crashbereichen derartiger Fahrzeuge angeordnet sind. Eine Beschädigung besagter HV-Komponenten kann ohne weitere Gegenmaßnahmen zu thermischen Ereignissen bzw. Brand, Kontakt von Insassen oder Rettungskräften mit HV-Potential bzw. elektrischem Schlag und/oder zu einem Ausfall von fahrzeug-internen Crash-, Schutz- oder Notfunktionen durch HV-Kontakt mit Niedervolt-Bauteilen oder Signalbordnetz führen. Als klassische Schutzmaßnahme wird ein besonderer mechanischer Schutz besagter Komponenten vorgesehen, wobei zusätzliches Gewicht in Kauf genommen wird und besonders kritische Komponenten der vorstehend genannten Art i.d.R. in der Fahrzeugmitte verortet bzw. nicht in exponierten Bereichen positioniert werden.

Durch ein derartiges Fahrzeug-Crashkonzept wird u.a. durch deutliche Beschränkung der Möglichkeiten einer räumlichen Anordnung von Komponenten innerhalb eines Fahrzeugs so weit als möglich sichergestellt, dass die HV-Komponenten im Crash-Fall nicht zerstört werden. Die HV-Komponenten werden von der Fahrzeugstruktur geschützt und/oder sind selber dementsprechend robust und mechanisch belastbar gestaltet.

Aus dem Stand der Technik sind zudem diverse Sicherungsverfahren bekannt, die beim Sensieren eines Unfalls eine physikalische Trennung einer elektrischen Batterie bzw. eines Akkumulators von einem restlichen Netzwerk bzw. Hochvoltsystem bewirken. Zur Abtrennung des Hochvoltsystems HVS ist ein Schütz oder ein pyrotechnisches Element vorgesehen. Gemäß der Lehre der DE 10 2004 019 817 A1 werden bereits Pyrosicherungen zum Schutz elektrischer Verbraucher vor zu hohen Strömen und zur Abschaltung der Batterie bei einer gefährdenden Störung und im Crash-Fall genutzt. IN 2013MUM00283 A1 schlägt eine isolierende Trennung des Akkus durch einen pyrotechnischen Schalter vor im Fall von eindringendem Wasser, Feuer oder während eines Unfalls.

Des Weiteren wurde vorgeschlagen, die Abschaltung des Hochvoltsystems unabhängig von der Auslösung von Fahrtinsassenschutzsystemen vorzunehmen. Hierbei werden die Steuergeräte des HV-Systems und des Airbag-Systems an unterschiedliche Logik-Einheiten angeschlossen. DE 10 2009 039 913 A1 schlägt darüber hinaus vor, für eine Verbesserung der Abschaltung eines Hochvoltsystems in einem Fahrzeug ein eigenes Steuergerät mit zugehörigen Sensor-Eingängen zu schaffen. Damit wird eine prinzipielle Unabhängigkeit dieser Abschaltung gegenüber z.B. von einem andere Prioritäten setzenden Steuergerät für Airbags geschaffen.

US 2013 293248 A1 offenbart eine Schutzvorrichtung in einem Fahrzeug, bei der das Hochvoltsystem über einen aktiven Kurzschluss entladen wird.

US 2014 015316 A1 offenbart eine Schutzvorrichtung, bei der die U Phase eines Elektromotors im Fehlerfall über einen aktiven Kurzschluss entladen wird.

Die vorliegende Erfindung hat das Ziel, ein Sicherungsverfahren und ein Vorrichtung zu dessen Umsetzung sowie ein Fahrzeug der genannten Art zu schaffen, die die Sicherheit insbesondere bei einem Crash weiter erhöhen.

Diese Aufgabe wird erfindungsgemäß durch eine Schutzvorrichtung mit den Merkmalen von Anspruch 1 gelöst.

Quelle für elektrische Energie werden im Rahmen der vorliegenden Erfindung Speicher verstanden, die einen Gesamt-Energiegehalt von mehreren kWh aufweisen. Eine Quelle für elektrische Energie ist zum Beispiel Akkumulator-Pakete vom dem BMW-Modell i3, die einem Gesamt-Energiegehalt von ca. 19 kWh.

Dementsprechend sieht eine Schutzvorrichtung gemäß vorliegender Erfindung eine Trennvorrichtung zum physikalischen Trennen des Akkumulators als einem Speicher elektrischer Energie oder einer Brennstoffzelle oder einer sonstigen Quelle für elektrische Energie von einem HV-Zwischenkreis vor, wobei bei Trennung von dem Akkumulator der HV-Zwischenkreis mit einer Entladevorrichtung verbunden ist.

Eine Basis der vorliegenden Erfindung ist also die Erkenntnis, dass ein reines Trennen von Akkumulator oder elektrischer Energiequelle einerseits und Hochvolt-Zwischenkreis andererseits nicht ausreichend ist, da in dem Hochvolt-Zwischenkreis zu viele elektrisch geladene Komponenten vorhanden sind und/oder durch den Elektromotor in generatorischen Betriebszustand wieder elektrische Energie in den Hochvolt-Zwischenkreis eingespeist werden kann. Eine im Zwischenkreis und insbesondere im Bereich eines Inverters gespeicherte Energie könnte in einem Kurzschlussfall ohne vorherige Entladung kritisch werden, da im Verlauf unfallbedingter Deformationen einer Karosserie eines Fahrzeugs einhergehend mit einer Beschädigung eines Bestandteils des Hochvolt-Zwischenkreises insbesondere Risiken durch elektrischen Schlag oder Feuer in dem Fahrzeug nicht ausgeschlossen werden können. Daher wird erfindungsgemäß durch die gezielte Entladung des Hochvolt- Zwischenkreises eine weitergehende und sehr effektive Gegenmaßnahme vorgeschlagen.

Vorteilhafte Weiterbildungen sind Gegenstand der jeweiligen Unteransprüche.

Vorzugsweise ist die Trennvorrichtung als Sicherung, Halbleiterelement oder Hochstrom-Schalter ausgeführt. Besonders bevorzugt wird jedoch eine Trennvorrichtung als in Form einer pyrotechnisch ausgelösten Sicherung. Derartige Sicherungen bewirken eine physikalische Trennung in kürzerer Zeit als Hochstrom-Schalter z.B. in der Bauform von Schützen.

Im Fall der Verwendung einer permanent-erregten Synchronmaschine als Motor-/Generatoreinheit wird in einer Weiterbildung der Erfindung zudem ein aktiver Kurzschluss eingerichtet, durch den eine Rückspeisung von in elektrische Energie gewandelter mechanischer Energie verhindert wird. Dementsprechend ist ein aktiver Kurzschluss in einem der Motor-/Generatoreinheit zugeordneten Bereich des HV-Zwischenkreises vorgesehen. Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: ein Blockschaltbild eines grundsätzlichen Aufbaus einer elektrischen Energieversorgung in einem Hybrid- oder Elektro-Fahrzeug;
- Figur 2:: eine detailliertere Darstellung einer Vorrichtung gemäß Figur 1;
- Figur 3:: ein zeitliches Fortschreiten einer Deformation im Zug eines standardisierten Unfallszenarios mit drei exemplarischen Momentdarstellungen mit zugeordneten Verfahrensschritten eines bekannten sowie eines erfindungsgemäßen Verfahrens in einer Ausführungsform und
- Figur 4:: ein Flussdiagramm zur Abschaltung in Abhängigkeit eines Typs eines jeweiligen Elektromotors.

Über die verschiedenen Abbildungen hinweg werden für gleiche Elemente stets die gleichen Bezugszeichen verwendet. Dabei wird ohne Beschränkung nachfolgend nur ein Einsatz in einem Fahrzeug mit elektrischer Energieversorgung aus einem Akkumulator betrachtet.

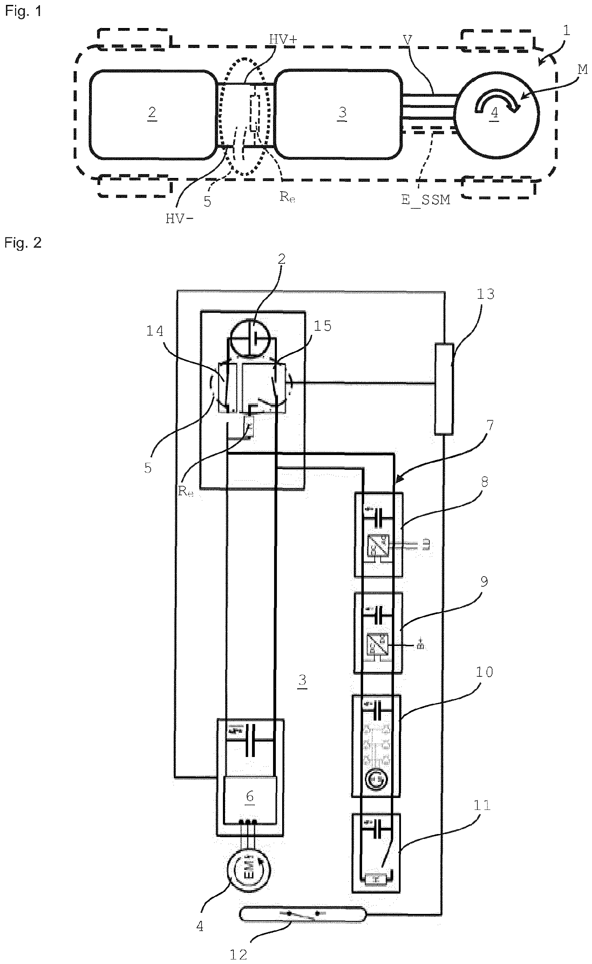

Figur 1 zeigt ein Blockschaltbild eines grundsätzlichen Aufbaus einer elektrischen Energieversorgung in einem aus dem Stand der Technik bekannten Hybrid- oder Elektro-Fahrzeug 1. Hierin ist in grob vereinfachter Darstellung eine Batterie bzw. ein Akkumulator 2 über Hochvolt-Potentiale HV+, HV- bzw. entsprechende Anschlüsse an einen Hochvolt-Zwischenkreis 3 und über diesen mit einem elektrischen Antriebsmotor 4 bzw. Generator verbunden. Während die Rolle des Akkumulators 2 als genereller Energielieferant sowie Speicher von durch Rekuperation gewonnener Bremsenergie schnell dargestellt ist, ist die Rolle des Hochvolt-Zwischenkreises 3 wesentlich komplexer. Der Hochvolt-Zwischenkreis 3 stellt mehr als nur ein Verbindungsglied zwischen dem Akkumulator 2 und der Motor-/ Generatoreinheit 4. Die Aufgaben des Hochvolt-Zwischenkreises 3 sind vielfältig, zumal er die Motor-/Generatoreinheit 4 je Betriebsart korrekt ansteuern muss und elektrische Energie im gesamten Fahrzeug den unterschiedlichen Anforderungen von Aggregaten entsprechend verteilen und überwachen muss. Zudem muss in dem Fall des Einsatzes einer stromerregten Synchronmaschine SSM durch den Hochvolt-Zwischenkreis 3 auch ein Erregerstrom E_SSM für Läufer der stromerregten Synchronmaschine SSM bereitgestellt werden, während ein Stator der Motor-/Generatoreinheit 4 über Versorgungsleitungen V mit elektrischer Energie versorgt wird.

Bei einem Unfall ist nach dem Stand der Technik lediglich eine Trennung von Akkumulator 2 und Hochvolt-Zwischenkreis 3 vorgesehen. Damit soll verhindert werden, dass im Zuge unfallbedingt fortschreitender Beschädigungen sowie Verformungen des Fahrzeugs 1 der Ackumulator elektrisch leitend z.B. mit Komponenten der Karosserie etc. in Kontakt treten. Das hätte hohe Stromflüsse mit Brandgefahr zur Folge und könnte zu einem elektrischen Schlag auch bei Fahrzeuginsassen führen.

Erfindungsgemäß wird nun erkannt, dass ein reines elektrisch isolierendes Trennen von Ackumulator 2 und Hochvolt- bzw. HV-Zwischenkreis 3 im Wesentlichen aus folgenden Gründen nicht ausreichend ist:
1. Der Hochvolt-Zwischenkreis 3 besteht aus zahlreichen elektrischen Bauteilen, durch die hohe Spannungen gespeichert werden können. Durch diese Spannungen können auch nach Trennung des Akkumulators 2 durch unfallbedingte Verformungen weiterhin Beschädigungen mit der Folge hoher Stromflüsse oder elektrischer Schläge hervorgerufen werden.
2. Durch einen Unfall wird eine in der Motor-/ Generatoreinheit 4 gespeicherte mechanische Energie M nicht unmittelbar abgeleitet. Die durch eine stetige Rotordrehzahl vorhandene mechanische Energie M wird vielmehr generatorisch in elektrische Energie E gewandelt und dem Hochvolt-Zwischenkreis 3 zugeführt.

Selbst wenn ein System mit Crash-Sensorik und einer schnellen Trennung des HV-Systems von dem Akkumulator 2 umgesetzt würde, so hat das HV-System immer noch Energie E im HV-Zwischenkreis 3 gespeichert, z.B. in den Kondensatoren des Inverters. Diese Energie E aus dem Zwischenkreis ist ausreichend groß, um ein Risiko bei Kurzschlüssen zu einem Niedervolt- oder einem Signalbordnetz darstellen. Zudem dürfen HV-Komponenten auch im Rahmen eines Unfalls nicht zerstört werden, wenn dadurch eine weitergehende Gefährdung u.a. für die Insassen ausgelöst werden könnte. Eine aus dieser Bedingung abgeleitete crashsichere Gestaltung und Anordnung benötigt viel Bauraum, Kosten und durch ein Art von Panzerung auch ein entsprechendes zusätzliches Gewicht. Entweder muss die Fahrzeugstruktur oder die Komponenten robuster ausgeführt werden, oder die Komponenten müssen an sicheren Orten im Fahrzeug integriert werden. Schließlich kann eine vergleichsweise langsame Abschaltung des elektrischen Systems im Zuge der unfallbedingt fortschreitenden Verformungen von Teilen einer Karosserie zu Kurzschlüssen führen, durch die z.B. Postcrash- Sicherheitsfunktionen beeinträchtigt oder außer Betrieb gesetzt werden könnten. Thermische Ereignisse oder ein HV-Kontakt können ebenfalls nicht ausgeschlossen werden. In einer in Figur 1 nur angedeuteten Art und Weise wird daher einer - mindestens einpoligen - elektrischen Trennung von Akkumulator 2 und Hochvolt-Zwischenkreis 3 eine Entladung des Hochvolt- Zwischenkreises 3 hinzugeschaltet, wie in Figur 1 durch einen elektrischen Widerstand Rₑ symbolisiert. Dieser Widerstand Rₑ ist im vorliegenden Ausführungsbeispiel als Teil einer Trennvorrichtung 5 vorgesehen und dafür ausgelegt, hohen Strömen über einen kurzen Zeitraum standhalten zu können, um damit eine definierte und effektive Entladung des Hochvolt-Zwischenkreises 3 nach Trennung von dem Akkumulator 2 zu garantieren.

Figur 2 offenbart eine detaillierte Darstellung einer Vorrichtung gemäß Figur 1. Hierdurch wird eine weite Verzweigung des HV-Zwischenkreises 3 angedeutet, der über eine Leistungselektronik 6 mit IGBT- oder MOSFET-Elementen in einem Inverter an die Motor-/ Generatoreinheit 4 angeschlossen ist, und über eine erfindungsgemäße Trennvorrichtung 5 mit dem Akkumulator 2 verbunden ist. Hier sind in einem parallelen Ast 7 des HV- Zwischenkreises 3 exemplarisch ein Ladegerät 8 mit einer Ladedose LD, ein DC/DC-Wandler 9, ein elektrischer Kältemittelverdichter 10 und eine elektrische Heizung 11 angeordnet. In diversen Verbrauchern wird also jeweils elektrische Energie E zwischengespeichert, wie in Figur 2 durch die Spannungspfeile bzw. Blitze an Kondensatoren angedeutet, die eine gefährdende Restladung des HV-Zwischenkreises 3 darstellt.

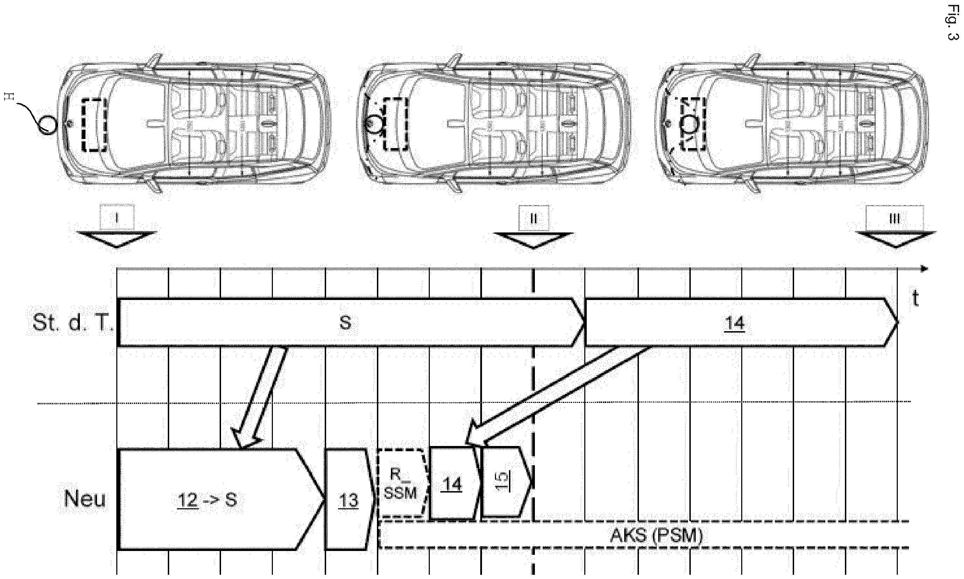

Ein Abschaltprozess gemäß der vorliegenden Erfindung unterteilt sich in verschiedene aufeinanderfolgende Sequenzen, siehe Figur 3. In Zustand I erfolgt ein erster Kontakt eines Hindernisses H mit einer Außenhaut des Fahrzeugs 1. Zuerst wird durch eine Sensorik 12 ein entsprechendes Signal S zur Crasherkennung generiert. Dabei wird auf Vorrichtungen und Verfahren nach dem Stand der Technik zurückgegriffen und hier z.B. die Sensorik einer Fußgänger-Schutzvorrichtung oder noch weitere Sensoren für die Crashdetektion verwendet, die nun den Crash auch zu Zwecke der Abschaltung des HV-Systems früher erkennt. Ein fahrzeug-spezifisch optimiertes Sensorkonzept ermöglicht eine Verkürzung einer Zeitspanne bis zu einer Crash-Erkennung.

Ein Signal S zur Crasherkennung wird von Sensoren 12 einem Crash-Steuergerät 13 zugeführt und dort zur nachfolgenden Steuerung der Teilprozesse verarbeitet. Demnach erfolgt - bei Verwendung einer stromerregten Synchronmaschine SSM erst eine Entregung des Magnetfeldes mit Rückführung der Energie in den Akkumulator 2, Schritt E_ESM, dann die Trennung des Akkumulators 2, z.B. durch Schalter 14, und schließlich die Entladung des Hochvolt-Zwischenkreises 3 über den Schalter 15 mit dem Hochstrom-Entladewiderstand Rₑ. Im Fall einer Verwendung einer permanenterregten Synchronmaschine PSM ist ein aktiver Kurzschluss AKS fortlaufend aufrecht zu erhalten, zumindest solange, als noch Bewegungsenergie M über die Motor-/ Generatoreinheit 4 als elektrische Energie gewandelt in den HV-Zwischenkreis 3 zugeführt werden kann. Da in der Motor-/ Generatoreinheit 4 entweder eine stromerregte Synchronmaschine SSM oder eine permanenterregte Synchronmaschine PSM vorgesehen sind, sind die entsprechenden Blöcke in Figur 3 entsprechend als Alternativen beide gestrichelt dargestellt. Im Wesentlichen ist das Verfahren aber in beiden Fällen bzw. Varianten gleichzeitig abgeschlossen.

Damit sind die vorstehend beschriebenen Vorgänge bis zum Erreichen des unfallbedingten Zustands II innerhalb kürzester Zeit seit dem ersten Kontakt der Fahrzeug-Außenhaut mit dem Hindernis H abgeschlossen. Hierbei findet nun fortschreitend eine Belastung der HV-Komponenten mit Kraft und Beschleunigung, was zu einer Beschädigung und Kurzschlüssen interner Komponenten miteinander und/oder mit Teilen der Karosserie führen kann. Im Übergang zu Zustand III finden nun noch weitere energieabsorbierende Verformungen statt. Während ein bekannter, hier mit St.d.T. bezeichneter Trennvorgang erst mit Erreichen dieses Zustands III abgeschlossen ist, ist gemäß des beschriebenen Ausführungsbeispiels schon bei etwa der Hälfte dieser Zeitspanne eine Trennung mit sicherer Entladung des HV-Zwischenkreises 3 abgeschlossen.

Um neben der vorstehend zum Stand der Technik beschriebenen fortbestehenden Gefährdungen die bekannten Restriktionen in Bezug auf eine Anordnung und Auslegung von HV-Komponenten in Crash-beaufschlagten Bereichen eines Fahrzeugs zu ermöglichen, wird
- die Abschaltsequenz verkürzt, siehe Figur 3 unten, und
- zusätzlich den HV-Zwischenkreis entladen, was seinerseits auch in zwei Schritten vorgenommen werden kann.

Hierzu werden an mehreren Stellen bekannte Elemente neu eingesetzt, die durch Pfeile in Figur 3 angedeutet. So entsteht eine Konzeptkaskade für die sichere Integration von HV-Komponenten in Crashbereichen. Dieses Konzept erlaubt somit eine Beschädigung der HV-Komponenten, wobei hiervon nachfolgend nur der HV-Speicher bzw. der Akkumulator 2 oder im Weiteren alle aktiv an dem Entladeprozess beteiligten Bauteile weiterhin ausgenommen sind, wie z.B. eine HV-Verbindung von der E-Maschine 4 zur Entladevorrichtung 5.

Als erstes ist durch den Einsatz eines optimierten Sensorikkonzeptes die für eine sichere Crasherkennung benötigte Zeit verkürzt. Dies kann erreicht werden durch Zusatzmaßnahmen, wie z.B. die Anbringung eines Druckschlauchs und zusätzlicher Beschleunigungsaufnehmer. Außerdem wird in diesem Beispielsfall zusätzlich noch eine Fußgängersensorik mit einbezogen, der mindestens ein weiterer Verzögerungssensor zum Aufbau einer Plausibilitätsprüfung nachgeschaltet ist. Durch das gesendete Signal wird eine Rekuperation des E-Motors abgeschaltet, so dass keine Energie mehr von der Motor-/ Generatoreinheit 4 in den HV-Speicher 2 geladen wird. Zeitgleich wird durch den Inverter 6 ein aktiver Kurzschluss AKS der Motor-/ Generatoreinheit 4 geschaltet, dadurch kann die Motor-/ Generatoreinheit 4 keine Energie in den HV-Zwischenkreis einspeisen. Der HV-Zwischenkreis ist die HV-DC-Spannungsebene, an welcher alle HV-Komponenten außerhalb des HV-Speichers angeschlossen sind, siehe Abb. 2.

Wenn eine stromerregte Synchronmaschine SSM als elektrischer Antriebsmotor 4 zum Einsatz kommt wird zeitgleich die Entladung dessen Erregerkreises gestartet, R_SSM. Wenn in dem Rotor der SSM kein Strom mehr fließt, so kann auch bei zerstörtem Inverter und damit Ausfall der AKS-Schaltung keine Energie mehr in den HV-Zwischenkreis 3 eingespeist werden.

Nach Abschalten der Rekuperation und des Magnetfels bei Einsatz einer SSM in der Motor-/ Generatoreinheit 4 folgt die Abtrennung des Hochvolt-Zwischenkreises 3. Im diesem Rahmen wird der HV-Speicher bzw. Akkumulator 2 über ein geeignet schnell und sicher elektrisch trennendes Element, wie z.B. ein pyrotechnisches Element mindestens einpolig von dem HV-Zwischenkreis 3 getrennt. Dies kann über ein pyrotechnisches Trennelement zur Trennung eines leitenden Kontakts umgesetzt werden. Dieses pyrotechnische Trennelement öffnet wesentlich schneller als ein Schütz. Dadurch wird die benötigte Zeit gegenüber bekannten Vorrichtungen deutlich verkürzt.

Weiter wird nun direkt nach der Abtrennung des HV-Speichers 2 der Entladewiderstand Rₑ als definiert leitender Kontakt zwischen einem positiven Potential HV+ und einem negativem Potential HV- des HV-Zwischenkreises 3 geschaltet. Dieser Kontakt darf erst geschaltet werden, wenn der HV-Speicher 2 getrennt ist. Ansonsten würde der HV-Speicher 2 kurzgeschlossen werden, was zu einem thermischen Ereignis mit einer lokalen Überhitzung bis zu einem Brand hin führen kann. So muss die strikte Trennung dieser zwei aufeinander folgenden Prozessschritte durch das Crash-Steuergerät 13 sichergestellt werden. Gleichzeitig muss ein vorstehend beschriebener Gesamtprozess sehr schnell ablaufen. Daher wird statt einer pyrotechnischen Sicherung ein pyrotechnisch betätigter Schalter 15 als Element verwendet, der eine Verbindung zum HVS trennt und gleichzeitig eine Verbindung zu dem Entladewiderstand Rₑ herstellt. Die Entladung des Zwischenkreises erfolgt damit über den zwischen HV+ und HV- geschalteten Entladewiderstand Rₑ. Der Entladewiderstand Rₑ ist so klein wie möglich dimensioniert, um die Entladung schnell zu erreichen, aber so groß dass die Stromtragfähigkeit des Zwischenkreises eingehalten wird.

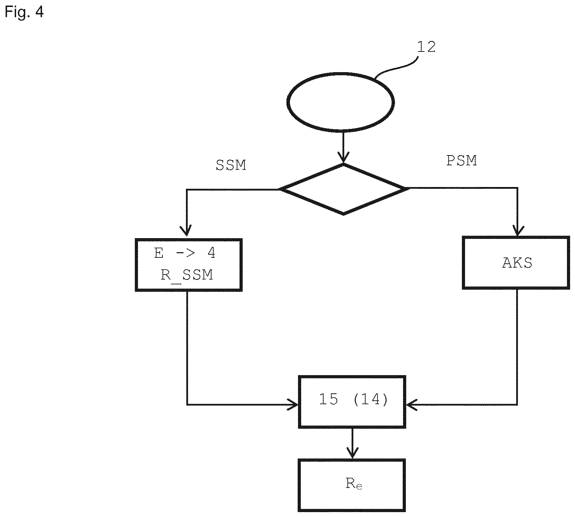

Zum Zeitpunkt der Beaufschlagung der HV-Komponenten ist nun der HV-Zwischenkreis 3 entladen. Aber die E-Maschine bzw. die Motor-/Generatoreinheit 4 dreht sich aufgrund der Stetigkeit der Fahrzeugbewegung und Aufrechterhaltung der kinetischen Energie M weiter. Dadurch wird kinetische bzw. rotatorische Energie weiter in elektrische Energie E gewandelt und in den HV-Zwischenkreis 3 eingeleitet. Bei einer permanent-erregten Synchronmaschine PSM bleibt dieser Zustand bis zum Fahrzeugstillstand aufrechterhalten. Bei einer stromerregten Synchronmaschine SSM bleibt dieser Zustand hingegen nur solange aufrechterhalten, bis die Rotorerregung elektrisch abgeschaltet ist. Es werden dahin durch das Crash-Steuergerät 13 Maßnahmen wie folgt gemäß dem Flussdiagramm von Figur 4 ergriffen. Mit dem Erkennen eines Crashs anhand von Signalen der Sensorik 12 wird ein weiteres Vorgehen abhängig von einer jeweiligen Antriebstechnik unterschieden. Im Fall einer permanenterregten Synchronmaschine PSM wird in der Leistungselektronik 6 ein aktiver Kurzschluss AKS geschaltet. Nach dem Trennen des HV-Zwischenkreises 3 von dem Akkumulator 2 wird der Entladewiderstand Rₑ an der Trennstelle zwischen die Potentiale HV+ und HV- des HV-Zwischenkreises 3 geschaltet. Durch den Entladewiderstand Rₑ wird diese Energie E sofort im HV-Zwischenkreis 3 kurzgeschlossen und kann daher das Signalbordnetz nicht oder nur noch minimal stören. Im Fall einer strom-erregten Synchronmaschine SSM als E-Maschine der Motor-/Generatoreinheit 4 wird diese zuerst entregt bzw. deren Magnetfeld abgebaut und die hierin gespeicherte Energie in den Hochvoltspeicher bzw. den Akkumulator 2 überführt. Dann erst erfolgt die Trennung des HV-Zwischenkreises 3 von dem Akkumulator 2, und nachfolgend wird der Entladewiderstand Rₑ an der Trennstelle zwischen die Potentiale HV+ und HV- des HV-Zwischenkreises 3 geschaltet.

Falls ein leitender Kontakt zwischen dem HV-Zwischenkreis 3 und einem Signal-Bus entsteht, wird dieser Zweig des Signalbus zwar inaktiviert, weil er darüber keine Information gesendet werden kann, aber andere Zweige des Signalbus können ungestört die Postcrashfunktionen ausführen und z.B. einen eCall absetzen. Die kurzgeschlossene Signalleitung hat zwar Kontakt mit dem HV-Zwischenkreis, aber wegen der Entladeschaltung wird ein Überspringen der eingespeisten Energie auf einen anderen Bereich im Signalbussteuergerät verhindert. Damit ist also eine zusätzliche Sicherungsebene beschaffen worden, die aktiv eingreift, falls sich noch etwas Energie im Zwischenkreis befindet.

Eine Asynchronmaschine (ASM) verhält sich in Kontext dieses Sicherheitskonzepts wie eine SSM. Nur bei SSM wird zusätzlich die Entregung des Rotors vollzogen. So ist ein erfindungsgemäßes Konzept für alle Arten von Motoreinheiten einsetzbar.

Durch eine vorstehend beschriebene Vorrichtung zur Umsetzung eines Sicherungsverfahrens werden gegenüber bekannten Ansätzen die nachfolgend zusammengestellten Vorteile realisiert:
- HV-Komponenten, wie z.B. Ladegeräte 8, DCDC-Wandler 9, Inverter, HV-Kabel, HV-Verteiler, Klimakompressoren 10, elektrische Heizung 11, Motor-/Generator-Einheit 4 dürfen in einem Crash zerstört werden, da aufgrund des vorstehend beschriebenen Systems hiervon keine elektrische Gefahr mehr ausgehen kann. Es ist keine robuste Gestaltung und/oder geschützte Positionierung innerhalb des Fahrzeugs 1 mehr zwingend notwendig.

Diese Maßnahme bedingt vorteilhafterweise
o weniger Bauraum
o weniger Gewicht
o günstigere Kosten
o Bauteile können selber ggf. Deformationsenergie aufnehmen.

Nur die Bauteile, die eine leitende Verbindung zwischen der Motor-/Generatoreinheit 4 und der Entladeschaltung bzw. Trennvorrichtung 5 sicherstellen, müssen diese leitende Funktion auch in einem Crashereignis sicher behalten.
- weitgehende Erhaltung aller in dem Fahrzeug 1 vorgesehenen Post-Crash-Maßnahmen, wobei ein möglicher Ausfall der Post-Crash-Funktionen sicher verhindert wird.
- ein Risiko einer möglichen Entzündung durch Kurzschluss wird minimiert.
- Ein Insasse ist vor Kontakt mit spannungsführenden Bauteilen mit > 60V sicher geschützt.

### Bezugszeichenliste

- 1: Elektro-Fahrzeug
- 2: Akkumulator / HV-Speicher
- 3: Hochvolt- bzw. HV-Zwischenkreis
- 4: elektr. Antriebsmotor bzw. Generator / Motor-/ Generatoreinheit
- 5: Trennvorrichtung
- 6: Leistungselektronik
- 7: paralleler Ast des HV-Zwischenkreises 3
- 8: Ladegerät
- 9: DC/DC-Wandler
- 10: elektrischer Kältemittelverdichter
- 11: elektrische Heizung
- 12: Sensorik
- 13: Crash-Steuergerät
- 14: Schütz an einem Pol des Akkumulators 2
- 15: pyrotechnischer Schalter an dem zweiten Pol des Akkumulators 2

- AKS: aktiver Kurzschluss (bei PSM)
- E: elektrische Energie
- E_SSM: Erregerstrom für Läufer bei SSM
- R_SSM: Entregung der SSM
- H: Hindernis
- HV+ / HV-: Hochvoltpotentiale zwischen
- LD: Ladedose
- M: mechanische Energie des Motors/Antriebsstranges
- PSM: permanent erregte Synchronmaschine
- Rₑ: Entladewiderstand
- S: Signal zur Crasherkennung aus Crash-Steuergerät 13
- SSM: Stromerregte Synchronmaschine
- V: Versorgungsleitungen zur Motor-/Generatoreinheit 4
- V_SSM: Verbindung zur Stromerregung im Fall der Verwendung einer SSM

## Patentansprüche

1. Schutzvorrichtung in einem Fahrzeug mit Starkstrom und Hochvoltkomponenten, insbesondere einem Hybrid- oder Elektro-Fahrzeug (1), wobei
in dem Fahrzeug (1) ein Akkumulator (2) als ein Speicher elektrischer Energie vorgesehen ist, der über einen HV-Zwischenkreis (3) mit einer elektrischen Motor-/Generatoreinheit (4) verbunden ist, und
ein HV-Zwischenkreis (3) als Mittel zum Wandeln und Verteilen der elektrischer Energie innerhalb des Fahrzeugs (1) vorgesehen ist,
wobei eine Trennvorrichtung (5) zum physikalischen Trennen des Akkumulators (2) von dem HV-Zwischenkreis (3) vorgesehen ist, durch die der HV-Zwischenkreis (3) mit einer Entladevorrichtung (Rₑ) in Form eines hochstrom-festen Entladewiderstandes verbunden ist,
wobei ein Crash-Steuergerät (13) zur Koordination einer schrittweisen Abschaltung der elektrischen Energieversorgung vorgesehen ist,
wobei ein Signal (S) zur Crasherkennung von Sensoren (12) dem Crash-Steuergerät (13) zugeführt und dort zur nachfolgenden Steuerung der Teilprozesse verarbeitet wird, wonach in einem Vorbereitungsschritt vor der physikalischen Trennung des Ackumulators (2) vom HV-Zwischenkreis (3) und insbesondere einem Inverter als Bestandteil des HV-Zwischenkreises (3) eine im Magnetfeld der Motor-/Generatoreinheit (4) gespeicherte Energie durch den HV-Zwischenkreis (3) in den Akkumulator (2) überführt wird,
wobei direkt nach der Abtrennung des Akkumulators (2) der Entladewiderstand (Rₑ) als definiert leitender Kontakt zwischen einem positiven Potential (HV+) und einem negativem Potential (HV-) des HV-Zwischenkreises (3) geschaltet wird,
und wobei die strikte Trennung dieser zwei aufeinander folgenden Prozessschritte durch das Crash-Steuergerät (13) sichergestellt wird.

2. Vorrichtung nach Anspruch 1, **dadurch gekennzeichnet, dass** ein pyrotechnisch betätigter Schalter (15) als Element verwendet wird, der eine Verbindung zum Akkumulator (2) trennt und gleichzeitig eine Verbindung zu dem Entladewiderstand (Rₑ) herstellt.

3. Vorrichtung nach einem der vorhergehenden Ansprüche, **dadurch gekennzeichnet, dass** ein aktiver Kurzschluss (AKS) in einem der Motor-/Generatoreinheit (4) mit permanent-erregten Synchronmaschine (PSM) zugeordneten Bereich des HV-Zwischenkreises (3) vorgesehen ist.

4. Hybrid- oder Elektro-Fahrzeug,
**dadurch gekennzeichnet,**
**dass** es eine Vorrichtung gemäß einem der vorhergehenden Ansprüche aufweist.

## Claims

1. Protective apparatus in a vehicle with a high current and high-voltage components, in particular a hybrid or electric vehicle (1), wherein
a storage battery (2), which is connected to an electric motor/generator unit (4) via a HV link circuit (3), is provided as a store of electrical energy in the vehicle (1) and
a HV link circuit (3) is provided as means for converting and distributing the electrical energy within the vehicle (1),
wherein an isolating apparatus (5) is provided to physically isolate the storage battery (2) from the HV link circuit (3), by way of which isolating apparatus the HV link circuit (3) is connected to a discharge apparatus (Rₑ) in the form of a discharge resistor that is resistant to high currents,
wherein a crash control device (13) is provided to coordinate a staged disconnection of the electrical energy supply,
wherein a signal (S) is fed from sensors (12) to the crash control device (13) for the purpose of crash identification and is processed there for the purpose of subsequent control of the subprocesses, after which, in a preparation step before the physical isolation of the storage battery (2) from the HV link circuit (3) and in particular an inverter as a constituent part of the HV link circuit (3), energy stored in the magnetic field of the motor/generator unit (4) is transmitted to the storage battery (2) by the HV intermediate circuit (3), wherein, directly after the storage battery (2) has been disconnected, the discharge resistor (Rₑ) is connected as decidedly conductive contact between a positive potential (HV+) and a negative potential (HV-) of the HV link circuit (3),
and wherein the strict isolation of these two successive process steps is ensured by the crash control device (13) .

2. Apparatus according to Claim 1, **characterized in that** a pyrotechnically activated switch (15) is used as the element that disconnects a connection to the storage battery (2) and at the same time establishes a connection to the discharge resistor (Rₑ).

3. Apparatus according to one of the preceding claims, **characterized in that** an active short circuit (AKS) is provided in a region of the HV link circuit (3) associated with the motor/generator unit (4) with permanent-magnet synchronous machine (PSM).

4. Hybrid or electric vehicle,
**characterized in that**
said vehicle has an apparatus according to one of the preceding claims.

## Revendications

1. Dispositif de protection dans un véhicule comprenant des composants à courant fort et à haute tension, en particulier un véhicule hybride ou électrique (1), dans lequel
dans le véhicule (1) un accumulateur (2) est prévu comme un stockage d'énergie électrique qui est relié à une unité moteur électrique/générateur (4) par un circuit intermédiaire HT (3), et
un circuit intermédiaire HT (3) est prévu comme un moyen pour convertir et distribuer l'énergie électrique à l'intérieur du véhicule (1),
un dispositif de séparation (5) étant prévu pour la séparation physique de l'accumulateur (2) du circuit intermédiaire HT (3), par lequel le circuit intermédiaire HT (3) est relié à un dispositif de décharge (Rₑ) sous la forme d'une résistance de décharge qui résiste au courant fort,
un appareil de commande de collision (13) étant prévu pour coordonner une coupure pas-à-pas de l'alimentation en énergie électrique,
un signal (S) de détection de collision provenant de capteurs (12) étant amené à l'appareil de commande de collision (13) et y étant traité pour la commande en aval des processus de séparation, après quoi, dans une étape de préparation avant la séparation physique de l'accumulateur (2) du circuit intermédiaire HT (3), une énergie accumulée dans le champ magnétique de l'unité moteur/générateur (4) est transférée à travers le circuit intermédiaire HT (3) à l'accumulateur (2), et en particulier à un onduleur faisant partie du circuit intermédiaire HT (3),
dans lequel, immédiatement après la déconnexion de l'accumulateur (2), la résistance de décharge (Rₑ) est connectée comme un contact conducteur de manière définie entre un potentiel positif (HV+) et un potentiel négatif (HV-) du circuit intermédiaire HT (3),
et dans lequel la séparation stricte de ces deux étapes de processus consécutives est assurée par l'appareil de commande de collision (13).

2. Dispositif selon la revendication 1, **caractérisé en ce qu'**un commutateur (15) à commande pyrotechnique est utilisé comme l'élément qui sépare une connexion avec l'accumulateur (2) et établit en même temps une connexion avec la résistance de décharge (Rₑ).

3. Dispositif selon l'une quelconque des revendications précédentes, **caractérisé en ce qu'**un court-circuit actif (AKS) est prévu dans une zone du circuit intermédiaire HT (3) associée à l'unité moteur/générateur (4) avec une machine synchrone à excitation permanente (PSM).

4. Véhicule hybride ou électrique, **caractérisé en ce qu'**il présente un dispositif selon l'une quelconque des revendications précédentes.
